# EUROPÄISCHE PATENTSCHRIFT

(11) **EP 2 319 294 B1**
(45) Veröffentlichungstag und Bekanntmachung des Hinweises auf die Patenterteilung: **28.06.2017**
(21) Anmeldenummer: 09175139.6
(22) Anmeldetag: 05.11.2009
(51) Int. Cl.: A01G 1/08

(54) **Vorrichtung zur Abgrenzung eines ersten Bodenbereichs von einem zweiten Bodenbereich**
Device for demarcating one ground area from another
Dispositif de limitation d'une première zone au sol à partir d'une seconde zone au sol

(43) Veröffentlichungstag der Anmeldung: 11.05.2011
(73) Patentinhaber: Neogard AG, 5728 Gontenschwil (CH)
(72) Erfinder: Gautschi, Erich, 5728, Gontenschwil (CH)
(74) Vertreter: BOVARD AG

(56) Entgegenhaltungen:
- DE-A1- 2 336 535
- DE-U1- 8 034 600
- FR-A- 1 586 489
- US-A- 5 720 128
- US-A1- 2008 163 566

## Beschreibung

### Sachgebiet der Erfindung

Diese Erfindung betrifft eine Vorrichtung zur Abgrenzung eines ersten Bodenbereichs von einem zweiten Bodenbereich. Die beiden Bodenbereiche können insbesondere verschiedene Bepflanzung aufweisen (zum Beispiel Rasenfläche gegenüber dem Blumenbeet) oder verschiedene Oberflächenbeschaffung haben (zum Beispiel Rasenfläche gegenüber dem Kiesweg). Solche Vorrichtungen sind insbesondere unter dem Namen Rasenkante oder auch Rasenabgrenzung bekannt.

### Stand der Technik

Seit langer Zeit sind die Menschen bestrebt, sich ordentliche und schöne Lebensräume zu bauen. Dies trifft auch auf den Garten zu, wo durch eine Kombination von Rasenflächen, Blumenbeeten, Kies- oder Sandwegen, Bodenplatten und anderen Elementen eine optisch ansprechende Umgebung geschaffen wird. Rasenflächen beispielsweise sehen nicht nur schön aus, sie eignen sich insbesondere auch für Kinder- oder Sportspiele oder können zur Erholung verwendet werden.

Nun hat der Rasen die Eigenschaft, sich mit der Zeit langsam auszudehnen, indem er über den Rand hinauswächst. Ausserdem muss er in regelmässigen Abständen gemäht und sonst gepflegt werden. Das Mähen am Rande ist oft unpraktisch, weil man manchmal mit einem herkömmlichen Rasenmäher gar nicht an den Rand heranfahren kann. Auch ist es durch den Niveauunterschied oft schwierig, einen sauberen Schnitt zu bekommen. Aus diesen Gründen ist es vorteilhaft, die mit Rasen bewachsene Fläche sauber von den anderen Gartenflächen (z.B. Blumenbeeten) abzutrennen. Dies ermöglicht einerseits einen einfacheren Unterhalt (weil beim Mähen die zu mähende Fläche genau bestimmt ist) und macht andererseits auch optisch einen viel schöneren Eindruck.

Um dieses Problem zu lösen hat man schon seit einiger Zeit vorgeschlagen, die Bodenbereiche mit der Rasenfläche von den anderen Bodenbereichen (zum Beispiel mit dem Blumenbeet) durch besondere Abgrenzungsvorrichtungen abzugrenzen. Diese Abgrenzungsvorrichtungen, auch Rasenkanten genannt, bestehen üblicherweise aus einem im Wesentlichen flachen Element, welches in den Boden zwischen den verschiedenen Bodenbereichen gedrückt wird. Diese Elemente werden in der Regel aus Stahlblech, Kunststoff oder aber aus Holz hergestellt.

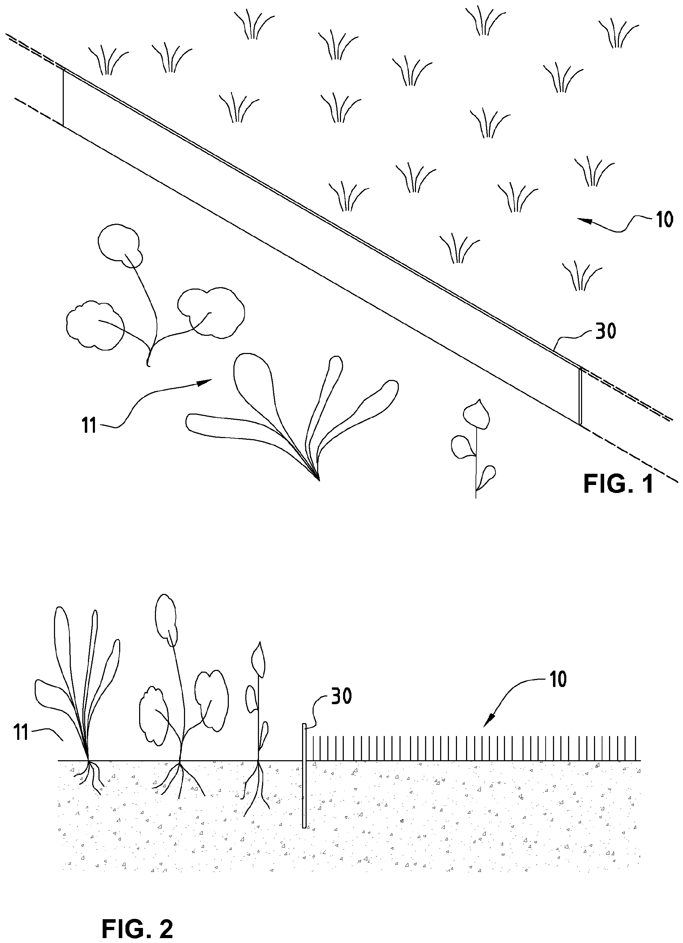

Eine solche herkömmliche Vorrichtung 30 ist in den beigelegten Fig. 1 und Fig. 2 schematisch dargestellt. So trennt die Vorrichtung 30 einen ersten Bodenbereich 10 (im konkreten Fall eine Rasenfläche) von einem zweiten Bodenbereich 11 (im konkreten Fall ein Blumenbeet). Wie in Fig. 2 in einer seitlichen Querschnittansicht dargestellt ist, werden die herkömmlichen Vorrichtungen 30 relativ tief in den Boden zwischen den beiden Bereichen 10 und 11 eingedrückt, so dass eine möglichst grosse Stabilität erreicht wird.

Nun funktioniert eine solche herkömmliche Vorrichtung 30 sehr gut, solange der Boden flach, wie in Fig. 1 und Fig. 2 dargestellt, oder regelmässig abfallend ist. Probleme entstehen jedoch, wenn sich die Vorrichtung 30 genau zwischen einem ersten Bodenbereich 10 und einem zweiten Bodenbereich 11 befinden, wobei, wie in Fig. 3A dargestellt, einer der beiden Bereiche flach und der andere abfallend ist. Durch die natürliche Erosion kommt nämlich der abfallende Bodenbereich 11 immer mehr in Bewegung, was mit der Zeit dazu führt, dass die Vorrichtung 30 den Halt verliert und gegen die Böschung kippt (durch einen Pfeil in Fig. 3B dargestellt). Eine Vorrichtung zur Abgrenzung eines ersten Bodenbereichs ist aus US-A-5720128 bekannt.

### Offenbarung der Erfindung

Es ist eine Aufgabe der vorliegenden Erfindung, eine neue Vorrichtung zur Abgrenzung eines ersten Bodenbereichs von einem zweiten Bodenbereich vorzuschlagen, welche nicht die oben beschriebenen Nachteile des Standes der Technik aufweist. Es ist insbesondere eine Aufgabe der vorliegenden Erfindung, eine Vorrichtung zur Abgrenzung eines ersten Bodenbereichs von einem zweiten Bodenbereich bereitzustellen, welche eine anhaltende Stabilität besitzt, aber trotzdem sehr einfach angewendet werden kann.

Gemäss der vorliegenden Erfindung werden diese Ziele insbesondere durch die Elemente des unabhängigen Anspruchs 1 erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass eine Vorrichtung zur Abgrenzung eines ersten Bodenbereichs von einem zweiten Bodenbereich aus einem mindestens teilweise aus dem Boden herausragenden vertikalen Element und mindestens einem im Wesentlichen horizontalen Element besteht, wobei das horizontale Element zur Befestigung der Vorrichtung zwischen dem ersten Bodenbereich und dem zweiten Bodenbereich durch einen Bodenbereich beschwert ist, wobei das vertikale Element seitliche Öffnungen aufweist, in welche ein Verbindungselement zur Verbindung von zwei Vorrichtungen einführbar ist, und wobei das Verbindungselement abgeschrägte Kanten hat, so dass eine Verbindung von zwei Vorrichtungen unter einem schrägen Winkel möglich ist.

Der Vorteil dieser Erfindung liegt vor allem darin, dass die Stabilität der Vorrichtung zur Abgrenzung eines ersten Bodenbereichs von einem zweiten Bodenbereich und insbesondere deren Halt in Bezug auf das Kippen um die Längsachse im Vergleich zu den herkömmlichen Vorrichtungen wesentlich verbessert werden. Dank dem Gewicht des Bodenbereichs, welcher sich über dem horizontalen Element befindet, ist ein Kippen wie bei herkömmlichen Vorrichtungen praktisch ausgeschlossen. Wenn die Erosion auf der Böschungsseite einen sehr grossen Teil des Bodens abträgt, bleibt die Abgrenzungsvorrichtungen dank dem horizontalen Element zudem fest verankert.

Erfindungsgemäss ist die Abgrenzung von verschiedenen Bodenbereichen auch dann möglich, wenn die Abgrenzungslinie länger ist als die Länge der Vorrichtung an sich. Dank dem Verbindungselement können beliebig viele Vorrichtungen miteinander verbunden werden, so dass eine längere durchgehende Abgrenzung möglich ist. Zudem wird durch die Tatsache, dass das Verbindungselement einfach in das vertikale Element eingesteckt werden kann, ein sehr einfaches Verbinden ermöglicht. Dank den abgeschrägten Kanten kann allen Unebenheiten des Bodens ausserdem leicht Rechnung getragen werden. So können zwei erfindungsgemässe Vorrichtungen bei unebenen Bodenbereichen genau gleich miteinander verbunden werden, wie wenn der Boden vollkommen eben ist. Dadurch kann ein einziges Modell der erfindungsgemässen Vorrichtung hergestellt werden, ohne dass dadurch die Verlegungsflexibilität und eine sehr umfassende Anwendungspalette beeinträchtigt wären.

In einer Ausführungsform der Erfindung sind das vertikale Element und das horizontale Element einstückig ausgebildet. Diese Ausführungsform hat insbesondere den Vorteil, dass die Stabilität der Vorrichtung weiter erhöht werden kann. Da sowohl das vertikale als auch das horizontale Element aus einem einzigen Stück bestehen, können grössere radiale Kräfte ausgehalten werden.

In einer anderen Ausführungsform der Erfindung ist die Vorrichtung durch Falten aus einem flachen Element hergestellt. Der Vorteil dieser Ausführungsform liegt insbesondere darin, dass die Herstellung der Vorrichtung sehr einfach gestaltet werden kann. Es sind nämlich bereits Maschinen vorhanden, welche das Falten von flachen Elementen ermöglichen. So können erfindungsgemässe Vorrichtungen besonders zeitoptimal und kostengünstig hergestellt werden.

In einer nochmals anderen Ausführungsform der Erfindung ist die Vorrichtung durch Zusammenfügen aus vorgefertigten Formteilen hergestellt. Unter Zusammenfügen wird jede geeignete Art von Verbindung von zwei oder mehreren Formteilen verstanden, beispielsweise Löten, Schweissen, Nieten oder Kleben. Diese Ausführungsform hat insbesondere den Vorteil, dass Formteile, aus welchen die Vorrichtung zusammengefügt wird, vorgefertigt und nach Bedarf zusammengefügt werden können. Auch kann dank dieser Art der Herstellung unter Umständen eine einfachere Herstellung gewährleistet werden. Da beliebig viele vorgefertigte Formteile beispielsweise in der Längsrichtung zusammengefügt werden können, können auch beliebig lange Vorrichtungen hergestellt werden, ohne dass grössere Anpassungen im Herstellungsprozess notwendig wären.

In einer weiteren Ausführungsform der Erfindung weist das horizontale Element in der Längsrichtung im Wesentlichen keilförmige Aussparungen auf. Der Vorteil dieser Ausführungsform liegt unter anderem darin, dass bei einer solchen Vorrichtung weniger Material für die Herstellung des horizontalen Elements verwendet wird. Auch ist die Vorrichtung etwas leichter, wodurch ein leichterer Transport und eine einfachere Verlegung möglich sind.

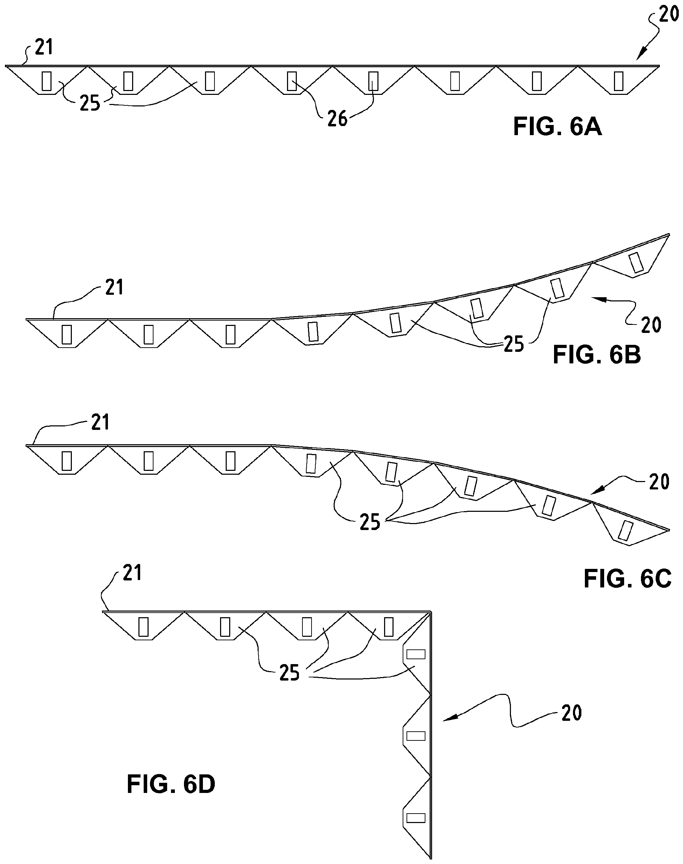

In einer anderen Ausführungsform der Erfindung sind die keilförmigen Aussparungen derart angeordnet, dass das horizontale Element durch die keilförmigen Aussparungen in mehrere horizontale Elemente unterteilt ist. Der Vorteil dieser Ausführungsform liegt insbesondere darin, dass auf diese Weise mehrere horizontale Elemente entstehen, welche durch die keilförmigen Aussparungen voneinander getrennt sind. Dank einer solchen Konfiguration ist es möglich, die Vorrichtung gemäss dieser Ausführungsform nicht nur für gerade Abschnitte zwischen zwei Bodenbereichen zu verwenden, sondern auch eine beliebige Kurvenlinie nachzubilden. Eine etwas detailliertere Erläuterung dieser Eigenschaften ist in Fig. 6A bis 6D dargestellt. Wie in diesen Figuren gesehen werden kann, ermöglichen die vielen keilförmigen Aussparungen, dass sich die einzelnen horizontalen Elemente nie in die Quere kommen.

In einer wieder anderen Ausführungsform weisen horizontale Elemente ein Befestigungsloch auf. Diese Ausführungsform hat vor allem den Vorteil, dass eine zusätzliche Befestigung und Verankerung der Vorrichtung möglich ist. Durch jedes Befestigungsloch kann jeweils ein Befestigungsbolzen in den Boden geschlagen werden, was in Kombination mit dem horizontalen Element eine nochmals höhere Stabilität der Vorrichtung ermöglicht.

In einer nochmals anderen Ausführungsform der Erfindung sind am vertikalen Element im Bereich der Aussparungen zwischen den horizontalen Elementen Sollbruchstellen vorgesehen. Der Vorteil dieser Ausführungsform liegt unter anderem darin, dass die Vorrichtung an den Sollbruchstellen sehr einfach gebogen oder gar getrennt werden kann. Dank den Sollbruchstellen kann die Vorrichtung auch ohne spezielle Werkzeuge angepasst werden, so dass sie beliebigen Kurvenlinien zwischen den abzugrenzenden Bodenbereichen folgt. Somit gestaltet sich das Verlegen der Vorrichtung sehr einfach.

Schliesslich ist in einer anderen Ausführungsform der Erfindung die Vorrichtung aus Metall oder Kunststoff hergestellt. Als Metall kann insbesondere Stahlblech verwendet werden. Selbstverständlich sind aber auch andere Metallformen denkbar. Der Vorteil dieser Ausführungsform liegt insbesondere darin, dass sich sowohl Metall (Stahlblech) als auch Kunststoff besonders für einen Einsatz im Garten eignen. Zudem sind sowohl Metall (Stahlblech) als auch Kunststoff Materialien, welche sich leicht in Form bringen lassen.

### Kurze Beschreibung der Zeichnungen

Nachfolgend werden die Ausführungsvarianten der vorliegenden Erfindung anhand von Beispielen beschrieben. Die Beispiele der Ausführungen werden durch folgende beigelegte Figuren illustriert:
Figur 1 zeigt eine perspektivische schematische Darstellung eines Gartenabschnitts mit einem ersten Bodenbereich und einem zweiten Bodenbereich, welche durch eine herkömmliche Vorrichtung voneinander abgegrenzt sind.
Figur 2 zeigt eine seitliche Querschnittansicht des Gartenabschnitts aus Fig. 1.

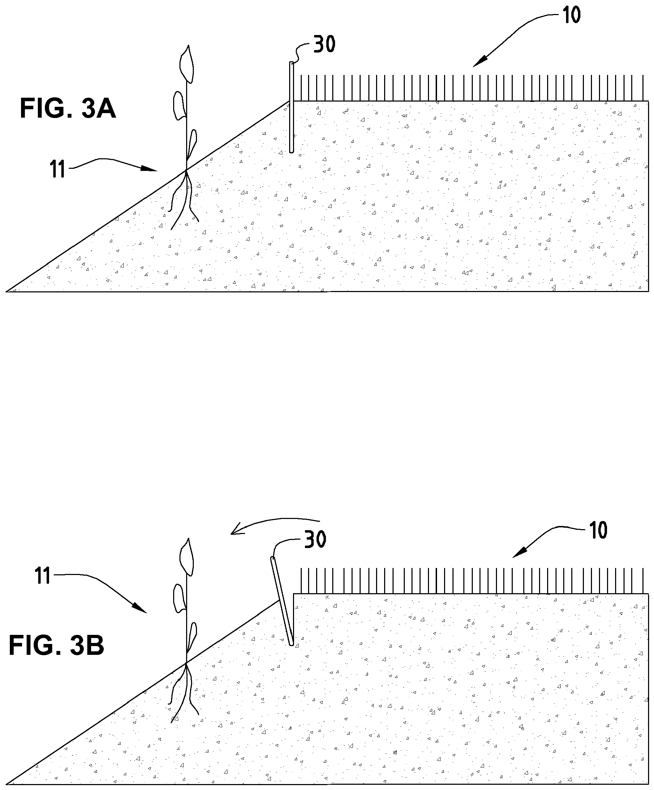

Figur 3 zeigt eine seitliche Querschnittansicht eines zweiten Gartenabschnitts, in welchem einer der beiden Bodenbereiche unter einem schrägen Winkel zum anderen der beiden Bodenbereiche steht, welche durch eine herkömmliche Vorrichtung voneinander abgegrenzt sind;
Figur 3A zeigt diesen Gartenabschnitt beim Verlegen der Vorrichtung.
Figur 3B zeigt diesen Gartenabschnitt nach einer gewissen Zeit, beim seitlichen Kippen der Vorrichtung.

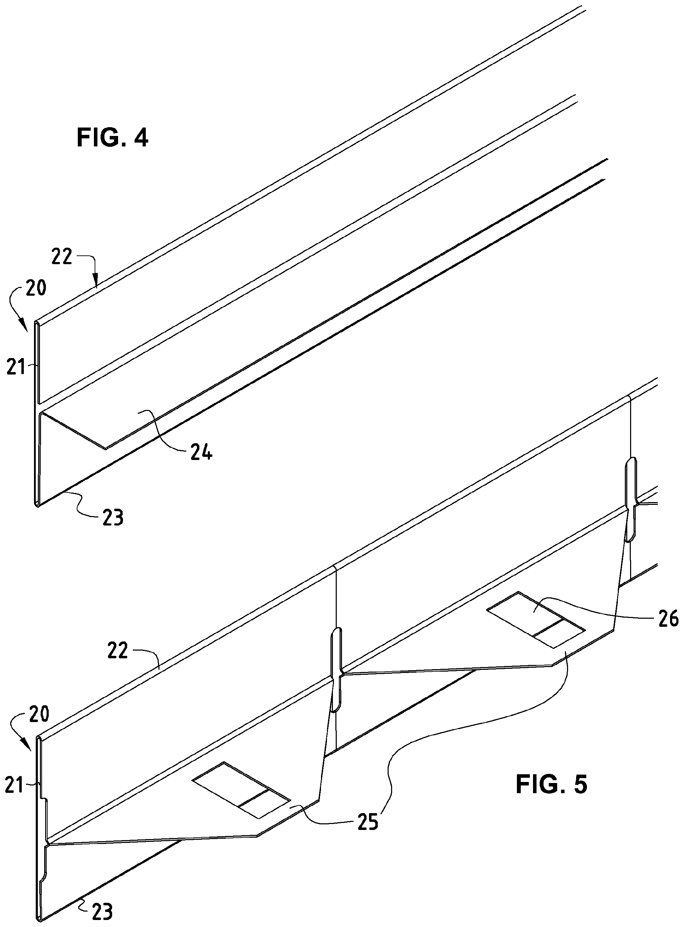

Figur 4 zeigt eine perspektivische schematische Darstellung einer Vorrichtung zur Abgrenzung eines ersten Bodenbereichs von einem zweiten Bodenbereich gemäss einer ersten Ausführungsform der vorliegenden Erfindung.
Figur 5 zeigt eine perspektivische schematische Darstellung einer Vorrichtung zur Abgrenzung eines ersten Bodenbereichs von einem zweiten Bodenbereich gemäss einer zweiten Ausführungsform der vorliegenden Erfindung.
Figur 6 zeigt die verschiedenen Möglichkeiten zur Herstellung von verschiedenen Kurvenlinien durch eine Vorrichtung aus Fig. 5.
Figur 6A zeigt eine gerade Kurvenlinie.
Figur 6B zeigt eine entgegen den horizontalen Elementen gebogene Kurvenlinie.
Figur 6C zeigt eine zu den horizontalen Elementen gebogene Kurvenlinie.
Figur 6D zeigt eine zu den horizontalen Elementen gebogene Kurvenlinie, welche einen rechten Winkel darstellt.

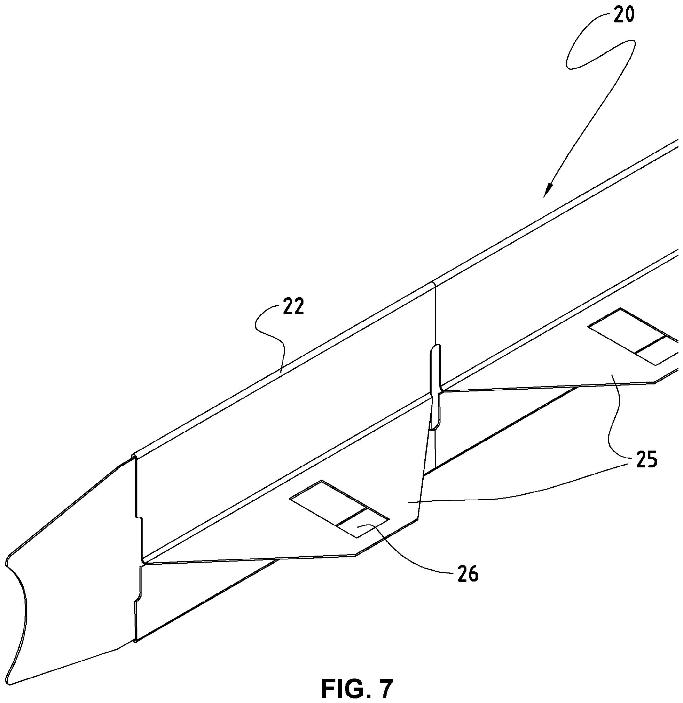

Figur 7 zeigt eine perspektivische schematische Darstellung einer Vorrichtung zur Abgrenzung eines ersten Bodenbereichs von einem zweiten Bodenbereich gemäss einer dritten Ausführungsform der vorliegenden Erfindung.

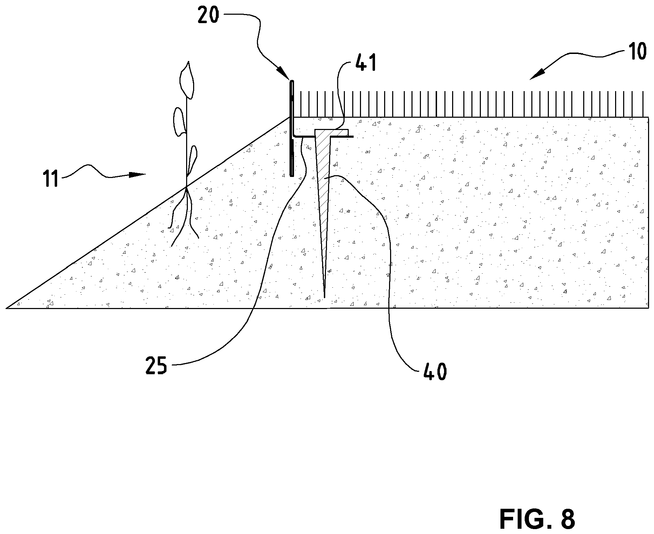

Figur 8 zeigt eine seitliche Querschnittansicht eines weiteren Gartenabschnitts mit der Vorrichtung zur Abgrenzung eines ersten Bodenbereichs von einem zweiten Bodenbereich gemäss einer vierten Ausführungsform der vorliegenden Erfindung.

### Detaillierte Beschreibung der Ausführungsformen der Erfindung

Wie oben angedeutet, sind in Figuren 1 bis 3 Vorrichtungen zur Abgrenzung eines ersten Bodenbereichs von einem zweiten Bodenbereich aus dem Stand der Technik beschrieben.

Figur 4 zeigt eine erste Ausführungsform der Vorrichtung 20 zur Abgrenzung eines ersten Bodenbereichs (z.B. Rasenfläche) von einem zweiten Bodenbereich (z.B. Blumenbeet) in einer perspektivischen schematischen Darstellung. Diese Vorrichtung 20 besteht aus einem vertikalen Element 21 und einem horizontalen Element 24. Beim Verlegen der Vorrichtung 20 kommt der obere Rand 22 des vertikalen Elements 21 ausserhalb des Bodens zu stehen, während der untere Rand 23 tief im Boden verankert wird. Dabei kann die Höhe des oberen Rands 22 in Bezug auf die Bodenoberfläche beliebig gewählt werden.

Die Vorrichtung 20, d.h. das vertikale Element 21 und/oder das horizontale Element 24, kann beispielsweise aus Metall oder Kunststoff hergestellt werden. Stahlblech eignet sich als Herstellungsmaterial. Selbstverständlich sind aber auch andere Metall- oder Nichtmetallmaterialien denkbar. Es ist darüber hinaus auch möglich, gewisse Teile der Vorrichtung 20 aus Metall, und andere Teile aus Kunststoff oder einem anderen Material herzustellen.

Das horizontale Element 24 und das vertikale Element 21 sind einstückig gebildet, beispielsweise durch geeignetes Falten eines Stahlblechs. Selbstverständlich ist es aber auch möglich, das horizontale Element 24 und das vertikale Element 21 auch aus zwei verschiedenen Stücken bzw. Formteilen zu bilden und sie dann durch ein geeignetes Verbindungsverfahren (Löten, Schweissen, Nieten, Kleben, etc.) miteinander zu verbinden.

Beim Verlegen der Vorrichtung 20 wird das vertikale Element 21 in den Boden eingedrückt, bis die gewünschte Höhe erreicht wird. Anschliessend wird das horizontale Element 24 durch einen Teil des Bodenbereichs gedeckt und beschwert, so dass die Vorrichtung 20 fest im Boden verankert ist. So wird eine höhere Stabilität erreicht, welche insbesondere ein seitliches Kippen der Vorrichtung verhindern kann. Es versteht sich von selber, dass beim Einsatz der Vorrichtung 20 zwischen zwei Bodenbereichen, von welchen einer im Wesentlichen flach und der andere abfallend ist (wie z.B. in Fig. 3), das horizontale Element 24 auf der flachen Seite angeordnet werden soll.

In Figur 5 wird eine zweite Ausführungsform der Vorrichtung 20 zur Abgrenzung eines ersten Bodenbereichs von einem zweiten Bodenbereich in einer perspektivischen schematischen Darstellung gezeigt. Diese Vorrichtung 20 besteht ebenfalls aus einem vertikalen Element 21. Allerdings ist nun das horizontale Element durch keilförmige Aussparungen in mehrere horizontale Elemente 25 unterteilt. Ansonsten gleicht diese Ausführungsform sehr derjenigen aus Fig. 4.

Jedes horizontale Element 25 kann insbesondere ein Befestigungsloch 26 aufweisen. Durch diese Befestigungslöcher 26 können Befestigungsbolzen bzw. Einschlagdorne in den Boden gedrückt werden. Eine solche Verwendung der Vorrichtung 20 ist in Fig. 8 dargestellt. Da wird gezeigt, wie ein Einschlagdorn verwendet werden kann. Wichtig ist, dass die Länge des Dornkörpers 40 relativ lang ist, so dass eine gute Verankerung im Boden ermöglicht wird. Köpfe 41 von Einschlagdornen kommen dabei jeweils auf die horizontalen Elemente 25 zu liegen, so dass dadurch auch eine grössere seitliche Stabilisierung erreicht wird.

Das vertikale Element 21 in Fig. 5 weist auch mehrere Sollbruchstellen auf, welche sich jeweils zwischen den einzelnen horizontalen Elementen 25 befinden. Dank diesen Sollbruchstellen kann die Vorrichtung 20 auch so angepasst werden, dass das vertikale Element 21 die Form verschiedener Kurvenlinien annimmt. Einige Beispiele dieser Kurvenlinien sind in Fig. 6 gezeigt. Dank den Aussparungen zwischen den einzelnen horizontalen Elementen 25 können beliebige Kurvenlinien (so auch ein rechter Winkel wie in Fig. 6D) sehr einfach erreicht werden. Die Biegung des vertikalen Elements 21 entlang der vorgesehenen Sollbruchstellen kann im Prinzip ohne jegliche Werkzeuge durchgeführt werden, indem beispielsweise ein Teil der Vorrichtung durch Gewichte am Boden festgeklemmt wird, während der andere Teil der Vorrichtung einfach nach oben gebogen wird.

Schliesslich wird in Fig. 7 in einer perspektivischen schematischen Darstellung eine weitere Ausführungsform der Vorrichtung zur Abgrenzung eines ersten Bodenbereichs von einem zweiten Bodenbereich gezeigt. In dieser Ausführungsform wird neben der Vorrichtung 20 ein Verbindungselement gezeigt. Dieses Verbindungselement dient zur seitlichen Verbindung zweier Vorrichtungen 20. Dies ist dann notwendig, wenn die abzugrenzenden Bodenbereiche grösser sind als die Länge der Vorrichtung 20.

Das Verbindungselement kann einfach in das vertikale Element 21 eingesteckt werden, da dieses vorteilhaft mit einer entsprechenden Öffnung ausgebildet wird. Die maximale Höhe des Verbindungselements (in dessen Mitte) entspricht der Höhe der Öffnung im vertikalen Element 21, so dass es nicht notwendig ist, das Verbindungselement im vertikalen Element 21 durch besondere Befestigungsmittel zu befestigen. Selbstverständlich ist es jedoch möglich, eine zusätzliche Befestigung vorzusehen.

Das Verbindungselement hat abgeschrägte Kanten. Dadurch ist es möglich, zwei Vorrichtungen 20 miteinander zu verbinden, auch wenn sie nicht vollständig auf demselben Niveau liegen. So ist es möglich, praktisch bei jeder Bodenkonfiguration eine durchgehende Abgrenzung von zweien Bodenbereichen zu ermöglichen.

Zum Schluss sei darauf hingewiesen, dass die zuvor beispielhaft beschriebenen Ausführungsformen nur eine Auswahl an möglichen Realisierungen der erfindungsgemässen Gedanken darstellen und keinesfalls als limitierend angeschaut werden sollen. Der Fachmann wird verstehen, dass auch andere Implementierungen der Erfindung möglich sind, ohne dass die wesentlichen Merkmale der Erfindung vernachlässigt werden.

## Patentansprüche

1. Vorrichtung (20) zur Abgrenzung eines ersten Bodenbereichs (10) von einem zweiten Bodenbereich (11), welche aus einem mindestens teilweise aus dem Boden herausragenden vertikalen Element (21) und mindestens einem im Wesentlichen horizontalen Element (24, 25) besteht, wobei das horizontale Element (24, 25) zur Befestigung der Vorrichtung (20) zwischen dem ersten Bodenbereich (10) und dem zweiten Bodenbereich (11) durch einen Bodenbereich (10) beschwert ist, **dadurch gekennzeichnet,**
**dass** das vertikale Element (21) seitliche Öffnungen aufweist, in welche ein Verbindungselement zur Verbindung von zwei Vorrichtungen (20) eingeführt ist, wobei das Verbindungselement abgeschrägte Kanten hat, so dass eine Verbindung von zwei Vorrichtungen (20) unter einem schrägen Winkel möglich ist.

2. Vorrichtung nach Anspruch 1, **dadurch gekennzeichnet, dass** das vertikale Element (21) und das horizontale Element (24, 25) einstückig ausgebildet sind.

3. Vorrichtung nach Anspruch 1 oder 2, **dadurch gekennzeichnet, dass** die Vorrichtung (20) durch Falten aus einem flachen Element hergestellt ist.

4. Vorrichtung nach Anspruch 1 oder 2, **dadurch gekennzeichnet, dass** die Vorrichtung (20) durch Zusammenfügen aus vorgefertigten Formteilen hergestellt ist.

5. Vorrichtung nach einem der Ansprüche 1 bis 4, **dadurch gekennzeichnet, dass** das horizontale Element in der Längsrichtung im Wesentlichen keilförmige Aussparungen aufweist.

6. Vorrichtung nach Anspruch 5, **dadurch gekennzeichnet, dass** die keilförmigen Aussparungen derart angeordnet sind, dass das horizontale Element durch die keilförmigen Aussparungen in mehrere horizontale Elemente (25) unterteilt ist.

7. Vorrichtung nach Anspruch 6, **dadurch gekennzeichnet, dass** horizontale Elemente (25) ein Befestigungsloch (26) aufweisen.

8. Vorrichtung nach einem der Ansprüche 5 bis 7, **dadurch gekennzeichnet, dass** am vertikalen Element (21) im Bereich der Aussparungen zwischen den horizontalen Elementen (25) Sollbruchstellen vorgesehen sind.

9. Vorrichtung nach einem der Ansprüche 1 bis 8, **dadurch gekennzeichnet, dass** die Vorrichtung (20) aus Metall oder Kunststoff hergestellt ist.

## Claims

1. Device (20), for demarcating a first ground region (10) from a second ground region (11), which consists of at least one vertical element (21) protruding at least partially out of the ground and at least one substantially horizontal element (24, 25), whereby, for fixing the device (20) between the first ground region (10) and the second ground region (11), the horizontal element (24, 25) is weighted down by means of a ground region (10), **characterized in**
**that** the vertical element (21) has lateral openings in which a connecting element is inserted for connection of two devices (20), whereby the connecting element has beveled edges, so that a connection of two devices (20) at an oblique angle is possible.

2. Device according to claim 1, **characterized in that** the vertical element (21) and the horizontal element (24, 25) are designed in one piece.

3. Device according to claim 1 or 2, **characterized in that** the device (20) is produced from a flat element by folding.

4. Device according to claim 1 or 2, **characterized in that** the device (20) is produced by joining together prefabricated shaped pieces.

5. Device according to one of the claims 1 to 4, **characterized in that** the horizontal element has in the longitudinal direction substantially wedge-shaped recesses.

6. Device according to claim 5, **characterized in that** the wedge-shaped recesses are disposed in such a way that the horizontal element is subdivided by the wedge-shaped recesses into a multiplicity of horizontal elements (25).

7. Device according to claim 6, **characterized in that** horizontal elements (25) have a fixing hole (26).

8. Device according to one of the claims 5 to 7, **characterized in that** predetermined breaking points are provided on the vertical element (21) in the region of the recesses between the horizontal elements (25).

9. Device according to one of the claims 1 to 8, **characterized in that** the device (20) is made of metal or plastic.

## Revendications

1. Dispositif (20) de démarcation entre une première zone de terrain (10) et une deuxième zone de terrain (11), qui consiste en un élément vertical (21) faisant saillie au moins partiellement hors du sol et au moins un élément substantiellement horizontal (24, 25), l'élément horizontal (24, 25) étant lesté, pour la fixation du dispositif (20) entre la première zone de terrain (10) et la deuxième zone de terrain (11), par une zone de terrain (10), **caractérisé en ce que**
l'élément vertical (21) présente des ouvertures latérales, dans lesquelles est introduit un élément de liaison pour relier deux dispositifs (20), l'élément de liaison ayant des bords biseautés, de telle sorte que la liaison entre deux dispositifs (20) soit possible selon un angle oblique.

2. Dispositif selon la revendication 1, **caractérisé en ce que** l'élément vertical (21) et l'élément horizontal (24, 25) sont formés d'un seul tenant.

3. Dispositif selon la revendication 1 ou 2, **caractérisé en ce que** le dispositif (20) est fabriqué par pliage à partir d'un élément plat.

4. Dispositif selon la revendication 1 ou 2, **caractérisé en ce que** le dispositif (20) est fabriqué par assemblage de pièces moulées préfabriquées.

5. Dispositif selon l'une des revendications 1 à 4, **caractérisé en ce que** l'élément horizontal présente, dans le sens de la longueur, des encoches substantiellement cunéiformes.

6. Dispositif selon la revendication 5, **caractérisé en ce que** les encoches substantiellement cunéiformes sont agencées de telle sorte que l'élément horizontal est subdivisé en plusieurs éléments horizontaux (25) par les encoches substantiellement cunéiformes.

7. Dispositif selon la revendication 6, **caractérisé en ce que** des éléments horizontaux (25) comprennent un trou de fixation (26).

8. Dispositif selon l'une des revendications 5 à 7, **caractérisé en ce que** des points de rupture sont prévus sur l'élément vertical (21) au niveau des encoches entre les éléments horizontaux (25).

9. Dispositif selon l'une des revendications 1 à 8, **caractérisé en ce que** le dispositif (20) est réalisé en métal ou en plastique.
